# EUROPEAN PATENT SPECIFICATION

(11) **EP 0 870 529 B1**
(45) Date of publication and mention of the grant of the patent: **18.06.2003**
(21) Application number: 98850050.0
(22) Date of filing: 06.04.1998
(51) Int. Cl.: B01D 53/06, B01D 53/10, B01D 53/83

(54) **Method and device for removing condensible components from warm industrial waste gas**
Verfahren und Vorrichtung zum Entfernen von kondensierbaren Komponenten aus einem warmen Industrieabgas
Méthode et dispositif pour éliminer des composants condensables d'un gaz d'échappement chaud industriel

(30) Priority: 08.04.1997 NO 971603
(43) Date of publication of application: 14.10.1998
(73) Proprietor: ABB FLÄKT AB, 120 86 Stockholm (SE)
(72) Inventor: Bockman, Ole K., 0674 Oslo (NO)
(74) Representative: Bjelkstam, Peter

(56) References cited:
- GB-A- 1 448 369
- US-A- 3 992 176
- US-A- 4 097 251
- US-A- 5 013 336

## Description

The present invention is related to a method and a device to remove condensible components from warm industrial waste gas.

Industrial waste gas containing condensible components is developed especially from ovens for hard burning or baking of carbon electrodes for electro metallurgic melting plant processes. The binding material in unburned electrodes are tar substances of different kinds, especially gas tar. The most relevant prior art document in this field is US 4 702 818. Other prior art documents which are less relevant in this connections read as follows, namely US 5 013 336, US 3 992 176, US 4 097 251 and GB 1 448 369.

During baking of the electrodes these gas tars are partly burnt and partly gasified and leave the burning oven as condensible components of the waste gas.

These tar substances are strongly contaminating matters which partly also are health damaging. They have to be removed from the waste gases before the gases can be led out to the atmosphere.

The tower substances comprise a wide range of components having condensing temperatures also within a large scale, typically from 200 °C for the heaviest components and down to well below 70 °C for the lightest tar substances.

The baking process for the electrodes is a stepwise process with preheating of unburned electrodes. This is strongly dependent on the waste gas temperatures, typically from 250 °C to 70 °C. The waste gases from the ovens for burning the electrodes may, besides tar substances, also contain dust, especially coal and coke dust as well as polluting gases.

The most effective and therefore dominant process to clean waste gases from anode burning ovens is a dry cleaning process. An adsorbent in powder form is added to the gas in the reactor thereby providing good contact between the gas and the adsorbent. By suitable choice of adsorbent the tar substances in gas form and other gases as well, may be adsorbed. Thereafter the adsorbent, dust and condensed, aerosol tar are separated from the waste gas in a bag filter.

The waste gas, however, must be cooled down for the cleaning process to be effective as to the tar. Condensed, aerosol tar very easily is separated and even the gaseous components are adsorbed the most easiest at a low temperature. Too low temperature, however is not desired considering the acid condensation in the cleaning plant. Desired gas temperature after cooling typically is 70 °C.

The cooling of the waste gas is a problem due to the tar substances being condensed on the cooling surfaces. The problem is solved in different ways, depending of the composition of the wasted gas.

Two different types of ovens principally are used for baking of carbon electrodes. The waste gases correspondingly have different composition. Waste gas from the so called closed type of oven has an high content of not burnt, evaporised tar and contains little dust. This type of waste gas is cooled down in water pipe coolers having preferable vertical cooling pipes as the tar condensed on the cooling pipes has so little viscosity that it substantially flows or sags down the pipes and drips off at the lowermost part

The waste gases from the so called open type of oven cannot be cooled in this way. The waste gas contains partly burned, heavy tar components and a relatively high content of dust. The coating these components and dust leaves, is thick and sticky and does not drip off. A thicker layer is built up which increasingly isolate the cooling surfaces completely.

To cool this waste gas, large cooling towers therefore are used where the gas is cooled by direct water injection through fine high pressure nozzles. The evaporation of the injected water cools the gas, however along residence in the tower is necessary. Such cooling towers therefore are large and expensive. Based on experience, operational problems often occurs with incomplete evaporation of the droplets, which may result in corrosion, where the droplets hit the walls in the tower, as well as wet bottom with corrosion and drainage of acid and tar containing sludge.

With the method and the device according to the present invention, cooling of the mentioned type of wasted gas from open electrode burning ovens with indirect coolers is made possible, without grooving of coating of the cooling surfaces thereby avoiding insulation of the surfaces. Simultaneously, condensible components are cleaned out of the waste gas by adsorption. This is achieved with the method and the device according to the present invention as defined with the features stated in the claims. the present invention combines furthermore the gas cooler with the reactor in the following cleaning process according to the state of the art.

The adsorbent in this cleaning process usually is coke dust or aluminium oxide. Latter is based on the fact that the aluminium industry without any comparison is the largest consumer of prebaked electrodes within the electro metallurgical industry. The prebaked anodes in melting ovens for aluminium act as reduction material and preburner in the reduction process. Larger aluminium plants have their own anode factories with continuous production of such anodes. Aluminium oxide has a large ability of adsorption for tar substances. The used and tar containing oxide may be used as raw material in the aluminium production. The tar substances are burnt in the aluminium ovens.

Coke dust may, as mentioned above, be used as adsorbent in the cleaning process. Tar containing coke dust may be used as raw material in the production of electrodes.

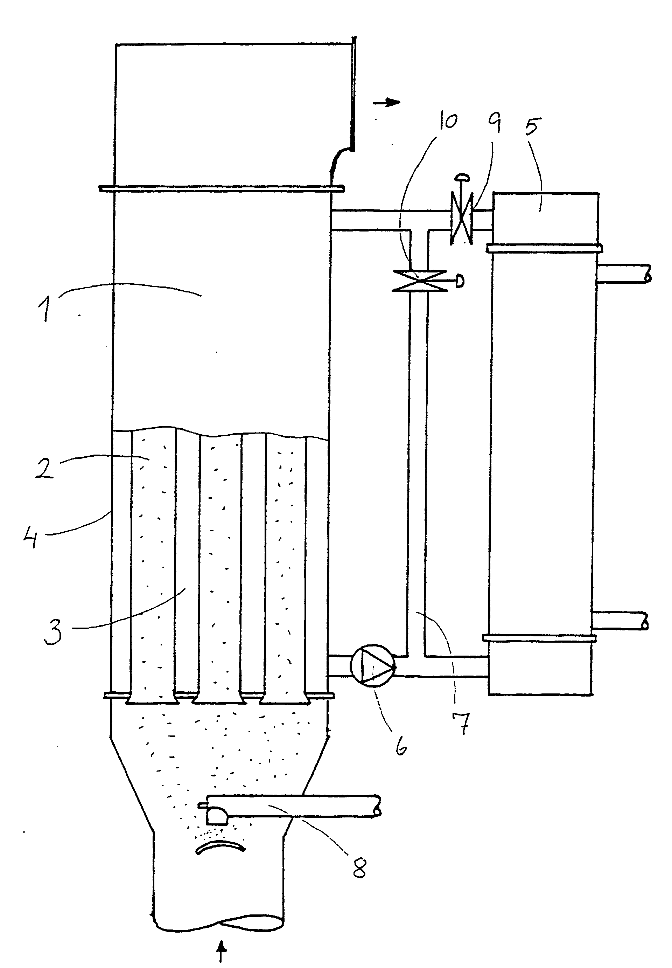

The present invention is described referring to the only figure.

The only figure discloses a vertical pipe cooler 1 for waste gas, containing a number of parallel, vertical, normally but not necessarily tubular, channels 2 through which the gas flows with the gas direction from below and upwardly. In a preferred embodiment of the invention the pipes are surrounded by cooling fluid 3 within the plate mantel 4 of the cooler 1. External cooling by air, however is also possible.

With the preferred embodiment of the invention, cooling fluid is circulated through the pipe cooler in a closed circuit containing a liquid cooler 5 as a secondary cooler, a pump 6 and a bypass circuit 7 for the regulation of the cooling by means of a valve 9 in the main circuit and a bypass valve 10. This is necessary because the temperature of the waste gas and therefore the need for cooling may change. Direct use of cooling water flowing through the pipe cooler is also possible.

The adsorbent in the form of a powder, is supplied to and mixed in with the wasted gas by means of an injection device 8 before the inlet to the cooler and is brought with the gas up to the pipes. The gas will assume a strong acceleration in the pipe openings and thereafter a retardation up through the pipes as the gas is cooled by contact with the cooled pipe walls. Both of this influences provide a relative speed and good contact between the gas and adsorbent in such a way that tar substances and possibly also other adsorbable, gaseous contaminations effectively are adsorbed.

The adsorbent, coke dust as well as aluminium oxide, is a hard material having grinding properties. When the adsorbent flows up through the pipes in the cooler it will grind away the sticky coating of heavy tar and dust as this is settled down to the pipe walls, in such a way that the pipe walls are kept clean or having such a thin coating that the heat transfer between the hot gas and the cool pipe walls is not substantially reduced. Hereby, also the necessary cooling of the gas by the flow through the cooler is achieved.

In the preferred embodiment of the invention the channels 2 are made of pipes of normal steel. The coating of heavy tar and dust which is to be ground by means of the adsorbent, is relatively soft in relation to steel, but the adsorbents, coke dust as well as aluminium oxide, are hard enough also to grind the steel away providing the velocity is high enough. The cooler reactor therefore has to be dimensioned in such a way that the velocity for gas and adsorbent will be sufficient to grind down the coating as this occurs, but not so high that the steel surfaces also are ground Suitable gas velocities are found to be in the range of 18-36 m/s through the pipes, dependent on the type and quality of the adsorbent.

With the combined cooler reactor according to the invention, substantial advantages are achieved, especially regarding costs of the plant as the new solution provides substantial lower investment costs than a cooling tower with a connected reactor.

## Claims

1. Method for removing condensible components from warm industrial waste gas from ovens for hard burning or baking of carbon electrodes for electro metallurgic melting plant processes, by mixing an adsorbent for the condensible components in the form of a powder material into the flow of waste gas, **characterized in that** said mixing is done before a cooler (1) such that the material is flowing together with the waste gas through gas channels (2) of the cooler (1), surrounded by a cooling medium (3), whereby the powder material is cleaning the cooling walls of the gas channels.

2. Method according to claim 1, **characterized in** using coke dust and/or aluminium oxides as adsorbent.

3. Device for removing condensible components from industrial waste gas from ovens for hardburning or baking of carbon electrodes for electro metallurgic melting plant processes, **characterized in that** the device comprises gas channels (2) in a cooler (1) which are surrounded by a cooling medium (3), adapted for through-going flow of the waste gas, and an injection device (8) being arranged in front of the entrance of the channels (2), adapted for mixing of an adsorbent in the form of a powder material in the waste gas flow, whereby the powder material is cleaning the heat transferring surfaces of the cooler from coating when guided through the channels (2) by the flow of waste gas.

4. Device according to claim 3, **characterized in** the cooling medium (3) circulating in a closed circuit with a liquid cooler (5), a pump (6) and a bypass circuit (7) for regulating the cooling by means of a valve (9) in the main circuit and a bypass valve (10).

5. Device according to claims 3-4, **characterized in** the gas channels (2) being arranged vertically and the injection device (8) guiding the adsorbent into the flow of a waste gas below the input of the gas channels (2).

6. Device according to claims 3-5, **characterized in** the gas channels (2) being tubular.

## Patentansprüche

1. Verfahren zum Entfernen von kondensierbaren Komponenten aus einem warmen industriellen Abgas von Öfen für ein Hartbrennen oder Backen von Kohlenstoffelektroden für elektrometallurgische Schmelzanlageverfahren durch Vermischung eines Adsorptionsmittels für die kondensierbaren Komponenten in der Form eines Pulvermaterials in die Strömung des Abgases, **dadurch gekennzeichnet, dass** die besagte Vermischung vor einem Kühler (1) in solcher Art und Weise durchgeführt wird, dass das Material zusammen mit dem Abgas durch Gaskanäle (2) des Kühlers (1) hindurchströmt, die von einem Kühlungsmedium (3) umgeben sind, wodurch das Pulvermaterial die kühlenden Wände der Gaskanäle säubert.

2. Verfahren nach Anspruch 1, **gekennzeichnet durch** die Verwendung von Kokslösche und/ oder Aluminiumoxiden als Adsorptionsmittel.

3. Vorrichtung zum Entfernen von kondensierbaren Komponenten aus einem industriellen Abgas von Öfen für ein Hartbrennen oder Backen von Kohlenstorfelektroden für elektrometallurgische Schmelzanlageverfahren, **dadurch gekennzeichnet, dass** die Vorrichtung Gaskanäle (2) in einem Kühler (1) aufweist, die von einem Kühlungsmedium (3) umgeben und für eine hindurchgehende Strömung des Abgases angepasst sind, und eine Einspritzvorrichtung (8), die vor dem Eingang der Kanäle (2) angeordnet und für die Vermischung eines Adsorptionsmittels in der Ausbildung eines Pulvermaterials in die Abgasströmung angepasst ist, wodurch das Pulvermaterial die Hitze übertragenden Oberflächen des Kühlers von einer Beschichtung säubert, wenn es durch die Strömung des Abgases durch die Kanäle (2) hindurchgeführt wird.

4. Vorrichtung nach Anspruch 3, **dadurch gekennzeichnet, dass** das Kühlungsmedium (3) in einem geschlossenem Kreislauf mit einem Flüssigkeitskühler (5), einer Pumpe (6) und einem Bypasskreislauf (7) zirkuliert wird für eine Regeln der Kühlung mittels eines Ventils (9) in dem Hauptkreislauf und eines Bypassventils (10).

5. Vorrichtung nach den Ansprüchen 3 und 4, **dadurch gekennzeichnet, dass** die Gaskanäle (2) vertikal angeordnet sind und das Einspritzgerät (8), welches das Adsorptionsmittel in die Strömung eines Abgases führt, sich unterhalb des Eingangs der Gaskanäle (2) befindet.

6. Vorrichtung nach den Ansprüche 3 bis 5, **dadurch gekennzeichnet, dass** die Gaskanäle (2) rohrförmig sind.

## Revendications

1. Procédé d'élimination de gaz d'échappement chauds industriels provenant de four de calcination ou de cuisson d'électrodes en carbone pour des opérations électrométallurgiques de fusion en usine, en mélangeant un adsorbant des constituants condensables sous la forme d'une matière en poudre dans le courant des gaz d'échappement, **caractérisé en ce que** l'on effectue le mélange avant un dispositif (1) de refroidissement, de façon à ce que la matière s'écoule ensemble, avec les gaz d'échappement, dans des canaux (2) pour le gaz d'échappement du dispositif (1) de refroidissement entourés d'un fluide (3) de refroidissement, la matière en poudre nettoyant les parois de refroidissement des canaux pour les gaz.

2. Procédé suivant la revendication 1, **caractérisé en ce qu'**on utilise du poussier de coke et/ou des oxydes d'aluminium comme adsorbant.

3. Dispositif d'élimination de gaz d'échappement chauds industriels provenant de four de calcination ou de cuisson d'électrodes en carbone pour des opérations électrométallurgiques de fusion en usine, en mélangeant un adsorbant des constituants condensables sous la forme d'une matière en poudre dans le courant des gaz d'échappement, **caractérisé en ce que** le dispositif comprend des canaux (2) pour des gaz dans un dispositif (1) de refroidissement qui sont entourés d'un fluide (3) de refroidissement et qui sont aptes à faire passer les gaz d'échappement et un dispositif (8) d'injection disposé en face de l'entrée des canaux (2) aptes à mélanger un adsorbant sous la forme d'une matière en poudre dans le courant des gaz d'échappement, la matière en poudre nettoyant les surfaces de transfert de la chaleur du dispositif de refroidissement en en enlevant ce qui les revêt lorsqu'elle est entraînée dans les canaux (2) par le courant des gaz d'échappement.

4. Dispositif suivant la revendication 3, **caractérisé en ce que** le fluide (5) de refroidissement passe suivant un circuit fermé comprenant un dispositif (5) de refroidissement de liquide, une pompe (6) et un circuit (7) de dérivation pour réguler le refroidissement au moyen d'une vanne (9) dans le circuit principal et d'une vanne (10) de dérivation.

5. Dispositif suivant la revendication 3 ou 4, **caractérisé en ce que** les canaux (2) pour les gaz sont disposés verticalement et le dispositif (8) d'injection guidant l'adsorbant dans le courant des gaz d'échappement est disposé en dessous de l'entrée des canaux (2) pour les gaz.

6. Dispositif suivant les revendications 3 à 5, **caractérisé en ce que** les canaux (2) pour les gaz sont tubulaires.
